# EUROPEAN PATENT APPLICATION

(11) **EP 4 844 338 A1**
(43) Date of publication of application: **25.11.2026**
(21) Application number: 25751092.5
(22) Date of filing: 14.01.2025
(51) Int. Cl.: G01B 15/06, H04W 4/38

(54) **DEFORMATION SENSING METHOD AND RELATED PRODUCTS**

(30) Priority: 07.02.2024 CN 202410175452
(71) Applicant: Huawei Technologies Co., Ltd., Shenzhen, Guangdong 518129 (CN)
(72) Inventor: WANG, Jian, Shenzhen, Guangdong 518129 (CN); DAOJIAN, Dingjiu, Shenzhen, Guangdong 518129 (CN)
(74) Representative: Huawei European IPR
(86) International application number: PCT/CN2025/072267
(87) International publication number: WO 2025/167490

(57) **Abstract**

A deformation sensing method is provided, and includes: A BBU (201, 501, or 801) transmits collection alignment information to an AISU (203, 503, or 803) through an AAU (202, 502, or 802). The BBU (201, 501, or 801) sends a sensing signal through the AAU (202, 502, or 802). The AISU (203, 503, or 803) collects, based on the collection alignment information, a displacement amount caused when the AAU (202, 502, or 802) sends the sensing signal. The AISU (203, 503, or 803) transmits the displacement amount to the BBU (201, 501, or 801) through the AAU (202, 502, or 802). The BBU (201, 501, or 801) receives at least two reflected signals. The BBU (201, 501, or 801) obtains an initial deformation amount of a target object based on the at least two reflected signals. The BBU (201, 501, or 801) corrects the initial deformation amount based on the displacement amount, to obtain a corrected deformation amount. Through existing base station devices that have been deployed and operate around the clock, the BBU (201, 501, or 801) receives the displacement amount caused when the AAU (202, 502, or 802) sends the sensing signal and collected by the AISU (203, 503, or 803), and corrects the initial deformation amount based on the displacement amount, to overcome interference from an external environment to the sensing signal, thereby achieving around-the-clock micro-deformation measurement with high accuracy. A deformation sensing apparatus (1200), a deformation sensing system (2000, 5000, or 8000), a chip, a chip module, a computer-readable storage medium, and a computer program product including instructions are further provided.

## Description

This application claims priority to Chinese Patent Application No. 202410175452.7, filed with the China National Intellectual Property Administration on February 7, 2024 and entitled "DEFORMATION SENSING METHOD AND RELATED PRODUCT", which is incorporated herein by reference in its entirety.

### TECHNICAL FIELD

This application relates to the field of communication technologies, and in particular, to a deformation sensing method and a related product.

### BACKGROUND

As bridges play an increasingly important role in transportation, continuous advancement of bridge design theories and construction technologies has led to continuous breakthroughs in bridge spans and increasingly complex structural forms.

However, middle-aged and old bridges currently account for a considerable proportion of a domestic land transportation network. With an increase in bridge ages, many bridges have experienced severe functional degradation due to natural factors such as an environment and a climate, as well as factors including an increasing traffic volume, an increasing quantity of heavy and overloaded vehicles crossing bridges, and human-induced accidents. Therefore, it is necessary to monitor bridge health and perform essential maintenance and repair to prevent occurrence of disasters such as bridge collapse.

Conventional detection methods are mainly manual-based, which include conducting regular on-site inspection to obtain measured data and then drawing conclusions through calculation and analysis. Such methods have a long period and cannot truly reflect operating states of bridges. Monitoring devices may be classified into contact-type monitoring devices and non-contact-type monitoring devices. The contact-type devices such as accelerometers and strain gauges need to be directly mounted on monitoring points and require deployment of a large quantity of data transmission lines. This is time-consuming and labor-intensive. Long-term operation leads to reduced endurance and high maintenance costs. The non-contact monitoring devices such as a video surveillance device, a global navigation satellite system (global navigation satellite system, GNSS), and a monitoring radar can obtain deformation information over long distances, but the video surveillance and the GNSS have low monitoring accuracy, and the monitoring radar is large in device size, heavy in weight, and expensive to manufacture, making the monitoring radar incapable of achieving around-the-clock online operation.

In view of this, how to achieve around-the-clock micro-deformation measurement with high accuracy is an urgent problem to be resolved.

### SUMMARY

This application provides a deformation sensing method and a related product, to achieve around-the-clock micro-deformation measurement with high accuracy.

According to a first aspect, a deformation sensing method is provided. The method is applied to a baseband unit (baseband unit, BBU). The BBU is connected to an active antenna unit (active antenna unit, AAU). The AAU is connected to an antenna information sensor unit (antenna information sensor unit, AISU). The method includes: The BBU transmits collection alignment information to the AISU through the AAU, where the collection alignment information includes an offset of a sensing signal relative to a first timing signal of the BBU and a sending period of the sensing signal. The BBU sends the sensing signal through the AAU. The BBU receives a displacement amount from the AISU through the AAU, where the displacement amount is a displacement amount caused when the AAU sends the sensing signal and collected by the AISU based on the collection alignment information. The BBU receives at least two reflected signals from a target object in response to the sensing signal. The BBU obtains an initial deformation amount of the target object based on the at least two reflected signals. The BBU corrects the initial deformation amount based on the displacement amount, to obtain a corrected deformation amount.

In the aspect, through existing base station devices that have been deployed and operate around the clock, the BBU transmits the collection alignment information to the AISU, so that the AISU collects, based on the collection alignment information, the displacement amount caused when the AAU sends the sensing signal of the BBU, and sends the displacement amount to the BBU, and the BBU can correct, based on the displacement amount, the initial deformation amount of the target object obtained by the BBU, to overcome interference from an external environment to the sensing signal, thereby achieving around-the-clock micro-deformation measurement with high accuracy.

With reference to the first aspect, in a possible implementation, the method further includes: The BBU performs time synchronization with the AISU.

In the implementation, the BBU and the AISU perform time synchronization, thereby improving reliability of data collected by the AISU.

With reference to the first aspect, in another possible implementation, the BBU is further connected to a first timing module, and the first timing module is based on a satellite signal or an Ethernet signal. That the BBU performs time synchronization with the AISU includes: The BBU calibrates an internal clock of the BBU based on reference time provided by the first timing module, where the first timing signal is generated by the first timing module.

In the implementation, the BBU and the AISU both perform clock calibration based on the satellite signal or the Ethernet signal, thereby improving reliability of data collected by the AISU.

With reference to the first aspect, in still another possible implementation, the BBU is further connected to a third timing module, and the third timing module is based on a satellite signal or an Ethernet signal. That the BBU performs time synchronization with the AISU includes: The BBU calibrates an internal clock of the BBU based on reference time provided by the third timing module, where the first timing signal is generated by the third timing module. The BBU sends the first timing signal to the AISU through the AAU. The BBU receives, from the AISU through the AAU, phase relationship information between a second timing signal and the first timing signal, where the second timing signal is generated by a fourth timing module in the AISU, and the fourth timing module is based on a crystal oscillator in the AISU. The BBU obtains phase compensation information based on the first timing signal and the phase relationship information. The BBU sends the phase compensation information to the AISU through the AAU.

In the implementation, the BBU performs clock calibration based on the satellite signal or the Ethernet signal, and the AISU performs time synchronization with the BBU based on the phase compensation information sent by the BBU, thereby improving reliability of data collected by the AISU.

With reference to the first aspect, in still another possible implementation, the corrected deformation amount is a difference between the initial deformation amount and the displacement amount.

According to a second aspect, a deformation sensing method is provided. The method is applied to an AISU, and the AISU is connected to a BBU through an AAU. The method includes: The AISU receives collection alignment information from the BBU through the AAU, where the collection alignment information includes an offset of a sensing signal relative to a first timing signal of the BBU and a sending period of the sensing signal. The AISU collects, based on the collection alignment information, a displacement amount caused when the AAU sends the sensing signal. The AISU transmits the displacement amount to the BBU through the AAU.

In the aspect, through existing base station devices that have been deployed and operate around the clock, the AISU receives the collection alignment information transmitted by the BBU, collects, based on the collection alignment information, the displacement amount caused when the AAU sends the sensing signal of the BBU, and sends the displacement amount to the BBU, so that the BBU can correct, based on the displacement amount, the initial deformation amount of the target object obtained by the BBU, to overcome interference from an external environment to the sensing signal, thereby achieving around-the-clock micro-deformation measurement with high accuracy.

With reference to the second aspect, in a possible implementation, the AISU includes a sensor; and the sensor collects, based on the collection alignment information, the displacement amount caused when the AAU sends the sensing signal.

With reference to the second aspect, in another possible implementation, the method further includes: The AISU performs time synchronization with the BBU.

With reference to the second aspect, in still another possible implementation, the AISU further includes a second timing module connected to the sensor, and the second timing module is based on a satellite signal or an Ethernet signal. That the AISU performs time synchronization with the BBU includes: The AISU calibrates an internal clock of the AISU based on reference time provided by the second timing module.

With reference to the second aspect, in still another possible implementation, the AISU further includes a fourth timing module connected to the sensor, and the fourth timing module is based on a crystal oscillator in the AISU. That the BBU performs time synchronization with the AISU includes: The AISU receives the first timing signal from the BBU through the AAU. The AISU obtains phase relationship information between a second timing signal and the first timing signal, where the second timing signal is generated by the fourth timing module. The AISU sends the phase relationship information to the BBU through the AAU. The AISU receives phase compensation information from the BBU through the AAU, where the phase compensation information is obtained by the BBU based on the first timing signal and the phase relationship information. The AISU performs time synchronization with the BBU based on the phase compensation information.

With reference to the second aspect, in still another possible implementation, a corrected deformation amount is a difference between the initial deformation amount and the displacement amount.

According to a third aspect, a deformation sensing method is provided. The method is applied to a deformation sensing system. The deformation sensing system includes a BBU, an AAU connected to the BBU, and an AISU connected to the AAU. The method includes: The BBU transmits collection alignment information to the AISU through the AAU, where the collection alignment information includes an offset of a sensing signal relative to a first timing signal of the BBU and a sending period of the sensing signal. The BBU sends the sensing signal through the AAU. The AISU collects, based on the collection alignment information, a displacement amount caused when the AAU sends the sensing signal. The AISU transmits the displacement amount to the BBU through the AAU. The BBU receives at least two reflected signals from a target object in response to the sensing signal. The BBU obtains an initial deformation amount of the target object based on the at least two reflected signals. The BBU corrects the initial deformation amount based on the displacement amount, to obtain a corrected deformation amount.

With reference to the third aspect, in a possible implementation, the AISU includes a sensor; and the sensor collects, based on the collection alignment information, the displacement amount caused when the AAU sends the sensing signal.

With reference to the third aspect, in another possible implementation, the method further includes: The BBU performs time synchronization with the AISU.

With reference to the third aspect, in still another possible implementation, the deformation sensing system further includes a first timing module connected to the BBU, the AISU further includes a second timing module connected to the sensor, and the first timing module and the second timing module are both based on a satellite signal or an Ethernet signal. That the BBU performs time synchronization with the AISU includes: The BBU calibrates an internal clock of the BBU based on reference time provided by the first timing module, where the first timing signal is generated by the first timing module. The AISU calibrates an internal clock of the AISU based on reference time provided by the second timing module.

With reference to the third aspect, in still another possible implementation, the deformation sensing system further includes a third timing module connected to the BBU, the AISU further includes a fourth timing module connected to the sensor, the third timing module is based on a satellite signal or an Ethernet signal, and the fourth timing module is based on a crystal oscillator in the AISU. That the BBU performs time synchronization with the AISU includes: The BBU calibrates an internal clock of the BBU based on reference time provided by the third timing module, where the first timing signal is generated by the third timing module. The BBU sends the first timing signal to the AISU through the AAU. The AISU obtains phase relationship information between a second timing signal and the first timing signal, where the second timing signal is generated by the fourth timing module. The AISU sends the phase relationship information to the BBU through the AAU. The BBU obtains phase compensation information based on the first timing signal and the phase relationship information. The BBU sends the phase compensation information to the AISU through the AAU. The AISU performs time synchronization with the BBU based on the phase compensation information.

With reference to the third aspect, in still another possible implementation, the corrected deformation amount is a difference between the initial deformation amount and the displacement amount.

According to a fourth aspect, a deformation sensing apparatus is provided. The deformation sensing apparatus is configured to implement the deformation sensing method in the first aspect or any one of the implementations of the first aspect. The apparatus may be a BBU, or may be a module (for example, a processor, a chip, or a chip system) used in the BBU, or may be a logical node, a logic module, or software that can implement all or some functions of the BBU.

According to a fifth aspect, a deformation sensing apparatus is provided. The deformation sensing apparatus is configured to implement the deformation sensing method in the second aspect or any one of the implementations of the second aspect. The apparatus may be an AISU, or may be a module (for example, a processor, a chip, or a chip system) used in the AISU, or may be a logical node, a logic module, or software that can implement all or some functions of the AISU.

In a possible implementation, the deformation sensing apparatus in the foregoing fourth aspect and fifth aspect includes a unit for performing the method in either of the first aspect and the second aspect or in any one of the implementations.

In another possible implementation, the deformation sensing apparatus in the foregoing fourth aspect and fifth aspect includes a processor coupled to a memory. The processor is configured to enable the apparatus to perform corresponding functions in the foregoing deformation sensing method. The memory is configured to be coupled to the processor, and stores a program (instructions) and/or data necessary for the apparatus. Optionally, the deformation sensing apparatus may further include a communication interface for implementing communication between the apparatus and another network element. Optionally, the memory may be located inside the deformation sensing apparatus, or may be located outside the deformation sensing apparatus.

In still another possible implementation, the deformation sensing apparatus in the foregoing fourth aspect and fifth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logical circuit or by executing code instructions. The transceiver apparatus may be a transceiver, a transceiver circuit, or an input/output interface, and is configured to receive a signal from another deformation sensing apparatus other than the deformation sensing apparatus and transmit the signal to the processor, or send a signal from the processor to another deformation sensing apparatus other than the deformation sensing apparatus. When the deformation sensing apparatus is a chip, the transceiver apparatus is a transceiver circuit or an input/output interface.

When the deformation sensing apparatus in the foregoing fourth aspect and fifth aspect is a chip, a sending unit may be an output unit, such as an output circuit or a communication interface, and a receiving unit may be an input unit, such as an input circuit or a communication interface. When the deformation sensing apparatus is a terminal device, the sending unit may be a transmitter or a sender, and the receiving unit may be a receiver or a receiving set.

According to a sixth aspect, a computer-readable storage medium is provided. The computer-readable storage medium stores a computer program or instructions, and when the computer program or the instructions are executed, the method in the foregoing aspects is implemented.

According to a seventh aspect, a computer program product including instructions is provided. The instructions, when run on a deformation sensing apparatus, cause the deformation sensing apparatus to perform the methods according to the foregoing aspects.

According to an eighth aspect, a deformation sensing system is provided. The deformation sensing system includes a BBU, an AISU, and an AAU separately connected to the BBU and the AISU. The BBU is configured to perform the method according to the first aspect or any one of the implementations of the first aspect, and the AISU is configured to perform the method according to the second aspect or any one of the implementations of the second aspect.

### BRIEF DESCRIPTION OF DRAWINGS

FIG. 1 is a diagram of a communication system according to an embodiment of this application;
FIG. 2 is a diagram of an architecture of a deformation sensing system according to an embodiment of this application;
FIG. 3 is a diagram of a principle of deformation sensing according to an embodiment of this application;
FIG. 4 is a schematic flowchart of a deformation sensing method according to an embodiment of this application;
FIG. 5 is a diagram of an architecture of another deformation sensing system according to an embodiment of this application;
FIG. 6 is a schematic flowchart of another deformation sensing method according to an embodiment of this application;
FIG. 7 is a diagram illustrating time synchronization between a BBU and an AISU according to an embodiment of this application;
FIG. 8 is a diagram of an architecture of still another deformation sensing system according to an embodiment of this application;
FIG. 9 is a schematic flowchart of still another deformation sensing method according to an embodiment of this application;
FIG. 10 is another diagram illustrating time synchronization between a BBU and an AISU according to an embodiment of this application;
FIG. 11 is a diagram illustrating a structure of a software phase-locked loop that implements clock synchronization through a phase detector according to an embodiment of this application; and
FIG. 12 is a diagram of a structure of a deformation sensing apparatus according to an embodiment of this application.

### DESCRIPTION OF EMBODIMENTS

Embodiments provided in this application are described below with reference to the accompanying drawings.

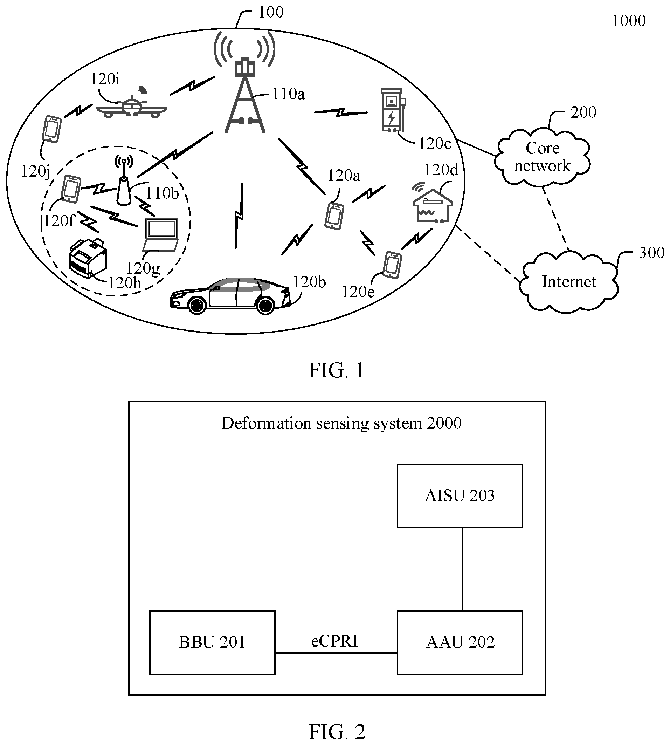

FIG. 1 is a diagram showing a possible nonrestrictive communication system. As shown in FIG. 1, a communication system 1000 includes a radio access network (radio access network, RAN) 100 and a core network (core network, CN) 200. The communication system 1000 may further include an internet 300. The RAN 100 includes at least one RAN node (for example, 110a and 110b in FIG. 1 are collectively referred to as 110) and at least one terminal device (for example, 120a to 120j in FIG. 1 are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the third generation partnership project (3rd generation partnership project, 3GPP), for example, a 4G mobile communication system, a 5G mobile communication system, a 5.5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 sometimes may also be referred to as an access network device, a RAN entity, an access node, or the like, and forms a part of the communication system, to help the terminal device implement radio access. A plurality of RAN nodes 110 in the communication system 1000 may be a same type of nodes, or may be different types of nodes. In some scenarios, roles of the RAN node 110 and the terminal device 120 are relative. For example, the network element 120i in FIG. 1 may be a helicopter or an unmanned aerial vehicle, and may be configured as a mobile base station. For the terminal device 120j that accesses the RAN 100 through the network element 120i, the network element 120i is a base station. However, for a base station 110a, the network element 120i is a terminal device. Both the RAN node 110 and the terminal device 120 are sometimes referred to as communication apparatuses. For example, in FIG. 1, the network elements 110a and 110b may be understood as communication apparatuses having base station functions, and the network elements 120a to 120j may be understood as communication apparatuses having terminal device functions.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a sixth generation (6^{th} generation, 6G) mobile communication system, a base station in a future mobile communication system, an access node in a Wi-Fi system, or the like. The RAN node may be a macro base station (such as 110a in FIG. 1), a micro base station or an indoor station (such as 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes assist a terminal device in implementing radio access, and different RAN nodes separately implement some functions of a base station. For example, the RAN node may be a central unit (central unit, CU), a distributed unit (distributed unit, DU), a central unit-control plane (central unit-control plane, CU-CP), a central unit-user plane (central unit-user plane, CU-UP), or a radio unit (radio unit, RU). The CU and the DU may be separately arranged, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an open-central unit (open-CU, O-CU), the DU may also be referred to as an open-distributed unit (open-distributed unit, O-DU), the CU-CP may also be referred to as an open-central unit-control plane (open-central unit-control plane, O-CU-CP), the CU-UP may also be referred to as an open-central unit-user plane (open-central unit-user plane, O-CU-UP), and the RU may also be referred to as an open-radio unit (open-radio unit, O-RU). For ease of description, the CU, the CU-CP, the CU-UP, the DU, and the RU are used as examples for description in this application. Any one of the CU (or the CU-CP and the CU-UP), the DU, and the RU in this application may be implemented through a software module, a hardware module, or a combination of the software module and the hardware module.

The terminal device may alternatively be referred to as a terminal, user equipment (user equipment, UE), a mobile station, a mobile terminal device, or the like. The terminal device may be widely used in various scenarios, for example, device-to-device (device-to-device, D2D), vehicle to everything (vehicle to everything, V2X), machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal device may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. Embodiments of this application constitute no limitation on a device form of the terminal device.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

The base station and the terminal device may be at fixed locations or may be movable. The base station and the terminal device may be deployed on land, including indoor or outdoor, handheld or vehicle-mounted; or may be deployed on a water surface; or may be deployed on an airplane, a balloon, and an artificial satellite. Embodiments of this application constitute no limitation on application scenarios of the base station and the terminal device.

Roles of the base station and the terminal device may be relative. For example, a helicopter or an unmanned aerial vehicle 120i in FIG. 1 may be configured as a mobile base station. For those terminal devices 120j that access the radio access network 100 through 120i, the terminal device 120i is a base station. However, for a base station 110a, 120i is a terminal device, that is, 110a and 120i perform communication through a wireless air interface protocol. Certainly, communication may also be performed between 110a and 120i through an interface protocol between base stations. In this case, compared with 110a, 120i is also a base station. Therefore, both the base station and the terminal device may be collectively referred to as communication apparatuses, 110a and 110b in FIG. 1 may be referred to as communication apparatuses having base station functions, and 120a to 120j in FIG. 1 may be referred to as communication apparatuses having terminal device functions.

In embodiments of this application, the base station is also referred to as an access network device. An apparatus configured to implement functions of the access network device may be an access network device, or may be an apparatus that can support the access network device in implementing the functions, for example, a chip system, a hardware circuit, a software module, or a combination of a hardware circuit and a software module. The apparatus may be installed in the access network device or used in combination with the access network device. In embodiments of this application, an example in which the apparatus configured to implement the functions of the access network device is an access network device is merely used for description, and constitutes no limitation on the solutions in embodiments of this application.

It should be understood that quantities and types of devices in the communication system shown in FIG. 1 are merely used as an example. This application is not limited thereto. During actual application, the communication system may further include more terminal devices and more access network devices, and may further include another network element, for example, may include a core network device and/or a network element configured to implement artificial intelligence functions.

It may be understood that all or some functions implemented by one or more of the terminal device, the access network device, the core network device, or the network element configured to implement the artificial intelligence functions may be virtualized, that is, implemented by one or more of a dedicated processor or a general-purpose processor and a corresponding software module. Because the terminal device and the access network device are related to an air interface transmission interface, receiving and sending functions of the interface may be implemented by hardware. The core network device such as an operation, administration, and maintenance (operation, administration, and maintenance, OAM) network element may be virtualized. Optionally, one or more functions of a virtualized terminal device, access network device, core network device, or network element configured to implement the artificial intelligence function may be implemented by a cloud device, for example, implemented by a cloud device in an over-the-top (over-the-top, OTT) system.

For a long time, wireless sensing has been an independently developed technology with no significant intersection with development of mobile communication systems. Sensing services are provided by various dedicated sensing devices, such as a common radar, a lidar, computed tomography scanner, magnetic resonance imager, and other devices. In 5G and earlier communication systems, positioning is the only sensing service that can be provided by a mobile communication system.

In 5.5G and future 6G mobile communication systems, general sensing other than positioning will be integrated into communication systems as a brand-new function, thereby opening up brand-new services, and realizing integrated sensing and communication (integrated sensing and communication, ISAC) in a system, so that communication and sensing functions complement each other. ISAC can help mobile operators provide many new services, such as high-accuracy positioning, tracking, biomedical and security inspection imaging, simultaneous localization and mapping for a complex indoor and outdoor environment, pollution and natural disaster monitoring, gesture and motion recognition, and defect and material detection. These new services will, in turn, create new business scenarios for future consumers and various vertical industries.

The monitoring radar mentioned in the background, such as a terrestrial microwave interference measuring instrument (terrestrial microwave interference measuring instrument, IBIS-S), is an innovative synthetic aperture radar measurement system based on microwave differential interferometry. Microwave interferometry improves reliability and accuracy based on artificial satellites and scanning device, and can be applied to static monitoring of buildings and ground surfaces. The IBIS-S can perform high-accuracy monitoring on micro-deformations of large-area target objects from several kilometers away by using a synthetic aperture radar (synthetic aperture radar, SAR) technology.

An IBIS-S monitoring system has the following characteristics:
(1) A telemetry distance can reach 4 kilometers, there is no need to mount sensors in a target area, and there is no need to approach or enter a target object.
(2) Measurement accuracy reaches 0.1 mm.
(3) Areas within beam coverage (up to several square kilometers) are simultaneously monitored, offering an advantage of continuous spatial coverage compared with a global navigation satellite system (global navigation satellite system, GNSS), total stations, and the like.
(4) Direct and real-time monitoring is achieved, and a local displacement amount can be obtained by analyzing information about a single pixel.
(5) When dangerous areas are measured, disaster warnings can be issued in real time and remote monitoring of large-area and inaccessible targets can be completed.
(6) Data collection time is short, and scanning may be performed once every 5 minutes.
(7) A device is simple and convenient to transport and install. This features a high degree of operation automation and powerful control and processing software.

However, the IBIS-S monitoring system also has the following disadvantages:
(1) A device is large in size, heavy in weight (approximately 30 Kg), expensive to manufacture, and battery-powered, making the device incapable of achieving around-the-clock online operation. The device can only be used for periodic inspection.
(2) Ground vibrations caused by passing heavy vehicles or strong wind may cause a radar to vibrate or sway, affecting the measurement accuracy.

In view of this, how to achieve around-the-clock micro-deformation measurement with high accuracy is an urgent problem to be resolved.

Therefore, this application provides a deformation sensing solution. Through existing base station devices that have been deployed and operate around the clock, a BBU transmits the collection alignment information to an AISU, so that the AISU collects, based on the collection alignment information, a displacement amount caused when an AAU sends a sensing signal of the BBU, and sends the displacement amount to the BBU, and the BBU can correct, based on the displacement amount, an initial deformation amount of a target object obtained by the BBU, to overcome interference from an external environment to the sensing signal, thereby achieving around-the-clock micro-deformation measurement with high accuracy.

FIG. 2 is a diagram of an architecture of a deformation sensing system 2000 according to an embodiment of this application. The system 2000 includes a BBU 201, an AAU 202, and an AISU 203. The BBU 201 is connected to the AAU 202 through an enhanced common public radio interface (enhanced common public radio interface, eCPRI), and the AAU 202 is further connected to the AISU 203 (where the AISU 203 is mounted on the AAU 202).

For example, the system 2000 may be a base station. Through use of the base station, micro-deformation sensing or monitoring can be implemented, to implement around-the-clock and 24/7 online monitoring. Base stations are existing infrastructures that are networked in a contiguous manner and widely distributed, can perform health monitoring on numerous target objects (such as bridges) within an area, require minimal modifications to existing devices, only need software upgrades, and have low construction costs. As a deformation sensing system, base stations have resolved deployment-related problems (such as site selection and power supply), enabling long-term observation without on-site attendance. The base stations can report measurement results (corrected deformation amounts) to a data center through a core network, facilitating convenient data collection without additional construction.

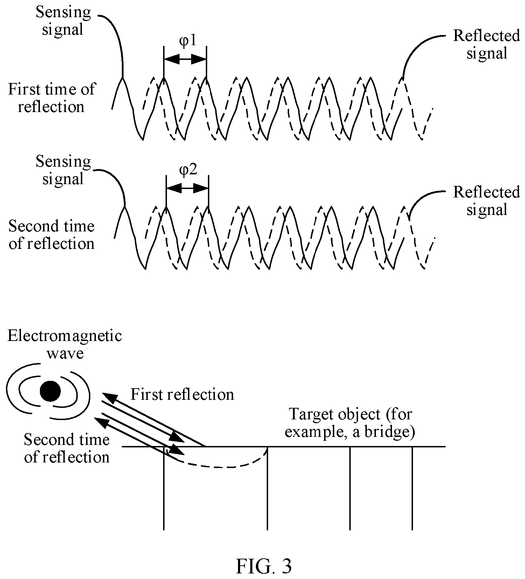

FIG. 3 is a diagram of a principle of deformation sensing according to an embodiment of this application. A BBU 201 sends a sensing signal through an AAU 202. After the sensing signal is reflected by a target object (for example, a bridge), a reflected signal arrives at the BBU 201. The BBU 201 may receive at least two reflected signals from the target object, and obtain an initial deformation amount of the target object based on the at least two reflected signals.

In FIG. 3, the BBU 201 sends the sensing signal for the first time, and a phase difference between a received reflected signal and the sensing signal is φ1. The BBU 201 sends the sensing signal for the second time, and a phase difference between a received reflected signal and the sensing signal is φ2. The BBU 201 obtains, based on the two phase differences, a micro initial deformation amount *Δd* of the target object that satisfies the following Formula 1: $Δd = - \frac{λ}{4 π} \left({φ}_{2}-{φ}_{1}\right)$ Formula 1

A wavelength *λ* = c/f, where c is a speed of light, and f is a center frequency at which a base station operates.

When the BBU 201 sends the sensing signal through the AAU 202, an antenna of the AAU may be affected by an external environment (such as wind and vibrations caused by passing trains), and an initial deformation amount obtained by the BBU 201 through measurement needs to be corrected. Therefore, the BBU 201 further transmits collection alignment information to the AISU 203 through the AAU 202. The collection alignment information includes an offset of the sensing signal relative to a first timing signal of the BBU and a sending period of the sensing signal, so that when the BBU 201 sends the sensing signal through the AAU 202, the AISU 203 can collect a displacement amount caused when the AAU sends the sensing signal, and transmit the displacement amount to the BBU 201. The BBU 201 may correct the initial deformation amount based on the displacement amount.

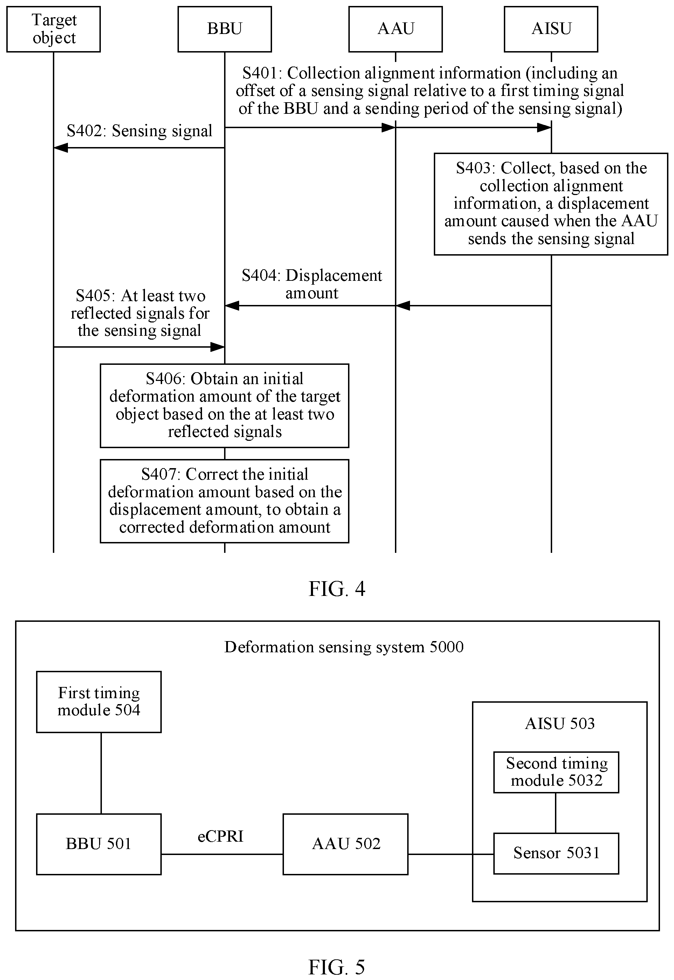

FIG. 4 is a schematic flowchart of a deformation sensing method according to an embodiment of this application. The method is applied to the foregoing deformation sensing system. For example, the method may include the following steps.

S401: A BBU transmits collection alignment information to an AISU through an AAU. Correspondingly, the AISU receives the collection alignment information.

The BBU calibrates a clock of the BBU before sending a sensing signal. For example, the BBU may calibrate an internal clock of the BBU based on reference time provided by a GNSS (where the GNSS periodically generates a first timing signal). After calibrating the clock, the BBU sends the sensing signal at a time-domain position with a specific offset relative to one first timing signal. In addition, the BBU may determine a sending period of the sensing signal.

The BBU transmits the collection alignment information to the AISU through the AAU. The collection alignment information includes an offset of the sensing signal relative to the first timing signal of the BBU and the sending period of the sensing signal. Based on the collection alignment information, sending and collection time alignment of the BBU and the AISU can be implemented.

A format of the collection alignment information may be shown in Table 1.

The offset (TimingOffset) of the sensing signal relative to the first timing signal of the BBU may have a bit width of 32 bits, and is in a unit of nanosecond (nanosecond, ns). The sending period (Tp) of the sensing signal may have a bit width of 32 bits, and is in a unit of ns. The collection alignment information may further include an enable indication for sending of the sensing signal (SensorEn). When a value of the enable indication is "1", it indicates that the sending of the sensing signal is enabled. When the value of the enable indication is "0", it indicates that the sending of the sensing signal is disabled.

**Table 1 Example formats of collection alignment information**

| Variable name | Bit width (bit) | Description |
|---|---|---|
| SensorEn | 1 | Enable indication for sending of a sensing signal, where 1 indicates that sending is enabled; and 0 indicates that the sending is disabled |
| TimingOffset | 32 | Offset of a timing signal in a unit of ns |
| Tp | 32 | Sending period of the sensing signal in a unit of ns |

After receiving the collection alignment information, the AISU may convert the offset and the sending period into a plurality of collection time points of the AISU, which means that the BBU configures collection time point information for the AISU through the AAU.

That "the BBU performs transmission through the AAU" means that the BBU performs transmission to the AISU through an eCPRI interface, and that "the AISU performs transmission through the AAU" means that the AISU performs transmission to the BBU through the eCPRI interface. The descriptions in the following may be understood as such meanings.

S402: The BBU sends the sensing signal through the AAU. Correspondingly, a target object receives the sensing signal.

For a format of the sensing signal, refer to the conventional technology.

Herein, the target object may be any object whose deformation needs to be measured, such as a bridge.

After the sensing signal arrives at the target object, the target object may send a reflected signal. For a sensing and reflection mechanism of the target object, refer to the conventional technology.

S403: The AISU collects, based on the collection alignment information, a displacement amount caused when the AAU sends the sensing signal.

When the BBU sends the sensing signal through the AAU, because the AISU is arranged on the AAU, and the AISU has obtained the collection alignment information, that is, has obtained the time-domain position and the period of the sensing signal sent by the BBU, the AISU may collect the displacement amount caused when the AAU sends the sensing signal.

Specifically, the AISU may collect displacement amounts caused by antenna vibrations when the AAU sends the sensing signal: dx(t), dy(t), and dz(t). dx(t) is a displacement amount in an x direction, dy(t) is a displacement amount in a y direction, and dz(t) is a displacement amount in a z direction.

S404: The AISU transmits the displacement amount to the BBU through the AAU. Correspondingly, the BBU receives the displacement amount.

After collecting the displacement amount caused when the AAU sends the sensing signal, the AISU transmits the displacement amount to the BBU through the AAU.

Formats of the displacement amount may be shown in Table 2.

**Table 2 Example formats of displacement amounts**

| Variable name | Bit width (bit) | Description |
|---|---|---|
| TimeStamp | 32 | Timestamp in a unit of ns |
| dx(t) | 32 | Displacement amount in an x direction, in a unit of 0.001 mm |
| dy(t) | 32 | Displacement amount in a y direction, in a unit of 0.001 mm |
| dz(t) | 32 | Displacement amount in a z direction, in a unit of 0.001 mm |

The displacement amounts include dx(t), dy(t), and dz(t). dx(t), dy(t), and dz(t) are all in a unit of 0.001 mm. The displacement amount may further include the timestamp (TimeStamp) in a unit of ns.

S405: The target object sends at least two reflected signals for the sensing signal to the BBU. Correspondingly, the BBU receives the at least two reflected signals from the target object in response to the sensing signal.

In step S402, after the BBU sends the sensing signal through the AAU, and the sensing signal arrives at the target object, the target object sends the reflected signals. The BBU receives the reflected signals from the target object.

In this embodiment, the BBU sends at least two sensing signals, and receives a reflected signal from the target object in response to each of the sensing signals, that is, a total of at least two reflected signals have been received.

S406: The BBU obtains an initial deformation amount of the target object based on the at least two reflected signals.

After sending the at least two sensing signals and receiving the at least two reflected signals from the target object, the BBU obtains initial deformation amounts of the target object based on the foregoing Formula 1: mx(t), my(t), and mz(t). mx(t) is an initial deformation amount in the x direction, my(t) is an initial deformation amount in the y direction, and mz(t) is an initial deformation amount in the z direction. mx(t), my(t), and mz(t) are functions of *Δd*.

S407: The BBU corrects the initial deformation amount based on the displacement amount, to obtain a corrected deformation amount.

After obtaining the displacement amount from the AISU and the initial deformation amount calculated by the BBU, the BBU corrects the initial deformation amount based on the displacement amount, to obtain the corrected deformation amount.

For example, corrected deformation amounts obtained by the BBU are Ax(t), Ay(t), and Az(t). Ax(t) is a corrected deformation amount in the x direction, Ay(t) is a corrected deformation amount in the y direction, and Az(t) is a corrected deformation amount in the z direction.

The corrected deformation amounts are differences between the initial deformation amounts and the displacement amounts, that is: $Ax \left(t\right) = mx \left(t\right) - dx \left(t\right) ;$ $Ay \left(t\right) = my \left(t\right) - dy \left(t\right) ;$ and $Az \left(t\right) = mz \left(t\right) - dz \left(t\right) .$

According to the deformation sensing method provided in this embodiment of this application, through existing base station devices that have been deployed and operate around the clock, the BBU transmits the collection alignment information to the AISU, so that the AISU collects, based on the collection alignment information, the displacement amount caused when the AAU sends the sensing signal of the BBU, and sends the displacement amount to the BBU, and the BBU can correct, based on the displacement amount, the initial deformation amount of the target object obtained by the BBU, to overcome interference from an external environment to the sensing signal, thereby achieving around-the-clock micro-deformation measurement with high accuracy.

The AISU and the BBU are two different modules, chips, or devices, and should perform time synchronization before performing communication.

Therefore, as shown in FIG. 5, an embodiment of this application further provides a deformation sensing system 5000. The deformation sensing system 5000 includes a BBU 501, an AAU 502, and an AISU 503. The BBU 501 is connected to the AAU 502 through an eCPRI interface. The BBU 501 is further connected to a first timing module 504. The AISU 503 includes a sensor 5031 and a second timing module 5032. The AAU 502 is connected to the sensor 5031.

The first timing module 504 and the second timing module 5032 are both based on a satellite signal (for example, using a GNSS as a clock source) or an Ethernet signal (for example, based on the IEEE 1588 protocol).

The first timing module 504 generates a first timing signal. The BBU 501 calibrates an internal clock of the BBU based on reference time provided by the first timing module 504.

The AISU 503 calibrates an internal clock of the AISU based on reference time provided by the second timing module 5032. Specifically, the sensor 5031 in the AISU 503 calibrates an internal clock of the sensor based on the reference time provided by the second timing module 5032.

For other functions of the BBU 501, the AAU 502, and the AISU 503, refer to the foregoing descriptions. Details are not described herein again.

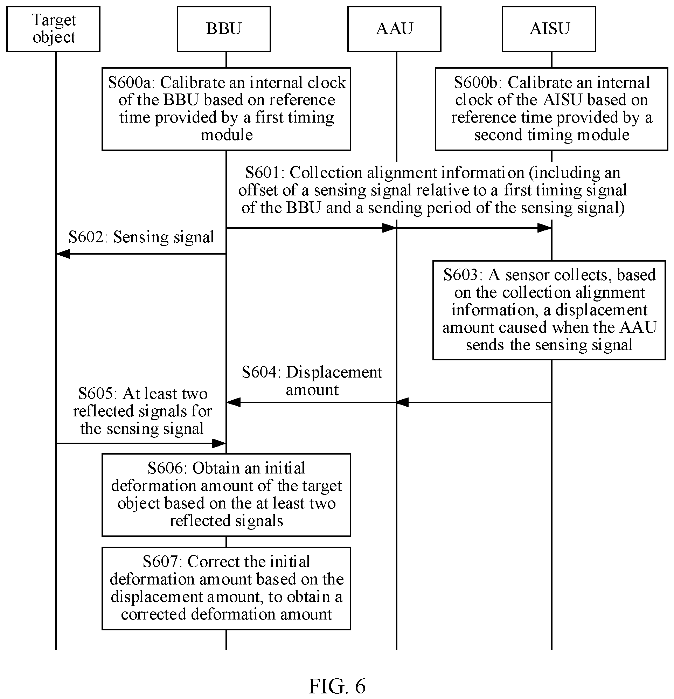

Based on the deformation sensing system shown in FIG. 5, FIG. 6 is a schematic flowchart of another deformation sensing method according to an embodiment of this application. For example, the method may include the following steps.

S600a: The BBU calibrates the internal clock of the BBU based on the reference time provided by the first timing module.

S600b: The AISU calibrates the internal clock of the AISU based on the reference time provided by the second timing module.

As described above, the first timing module 504 and the second timing module 5032 are both based on the satellite signal (for example, using the GNSS as the clock source) or the Ethernet signal (for example, based on the IEEE 1588 protocol). In this case, the BBU and the AISU may separately implement time synchronization based on the satellite signal or the Ethernet signal.

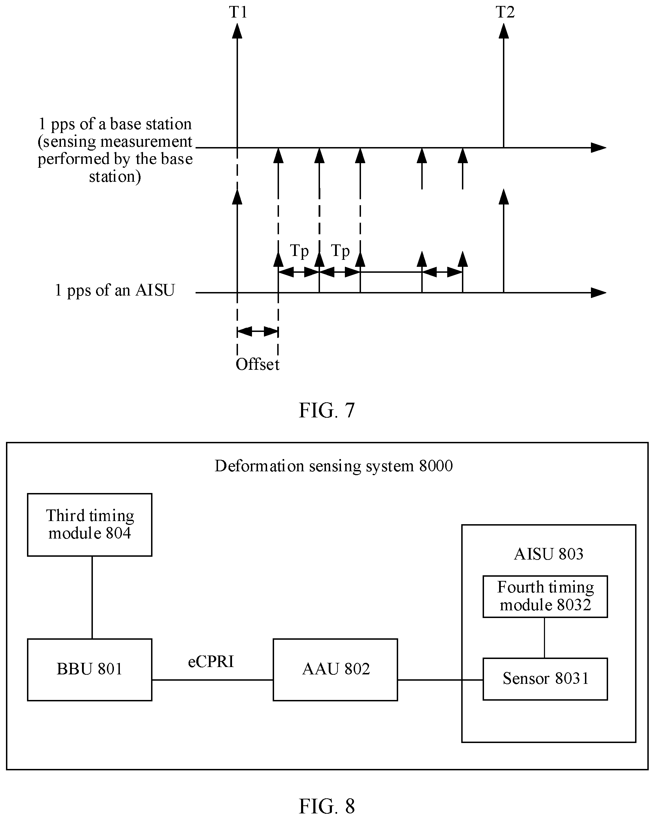

FIG. 7 is a diagram illustrating time synchronization between the BBU and the AISU according to an embodiment of this application. The first timing module (using the GNSS as an example herein) connected to the BBU generates the first timing signal, that is, a pulse-per-second (1 Pulse Per Second, 1 PPS) signal. The second timing module (using the GNSS as an example herein) connected to the AISU generates another timing signal, that is, a 1 PPS signal. Because the BBU and the AISU both calibrate the internal clocks thereof based on reference time provided by the GNSS, the BBU and the AISU can implement time synchronization.

In FIG. 7, T1 and T2 are time of 1 PPS signals generated by the GNSS connected to the BBU/AISU. A specific offset (offset) exists between time when the BBU sends a sensing signal for the first time and T1. The BBU calculates an offset of the sensing signal relative to the 1 PPS. Within the 1 PPS, the BBU may send a plurality of sensing signals, and a sending period of the sensing signals is Tp.

S601: The BBU transmits collection alignment information to the AISU through the AAU. Correspondingly, the AISU receives the collection alignment information.

The collection alignment information includes an offset of the sensing signal relative to the first timing signal of the BBU and the sending period of the sensing signal.

S602: The BBU sends the sensing signal through the AAU. Correspondingly, a target object receives the sensing signal.

S603: The sensor in the AISU collects, based on the collection alignment information, a displacement amount caused when the AAU sends the sensing signal.

S604: The AISU transmits the displacement amount to the BBU through the AAU. Correspondingly, the BBU receives the displacement amount.

S605: The target object sends at least two reflected signals for the sensing signal to the BBU. Correspondingly, the BBU receives the at least two reflected signals from the target object in response to the sensing signal.

S606: The BBU obtains an initial deformation amount of the target object based on the at least two reflected signals.

S607: The BBU corrects the initial deformation amount based on the displacement amount, to obtain a corrected deformation amount.

For specific implementations of the foregoing steps S601 to S607, refer to steps S401 to S407 in the embodiment shown in FIG. 4. Details are not described herein again.

For example, the deformation sensing system may be a base station. Therefore, measured data of the base station is corrected based on a displacement amount (that is, antenna vibration data) collected by a sensor on a base station antenna, so that testing accuracy of micro deformations can be improved.

According to the deformation sensing method provided in this embodiment of this application, through existing base station devices that have been deployed and operate around the clock, the BBU transmits the collection alignment information to the AISU, so that the AISU collects, based on the collection alignment information, the displacement amount caused when the AAU sends the sensing signal of the BBU, and sends the displacement amount to the BBU, and the BBU can correct, based on the displacement amount, the initial deformation amount of the target object obtained by the BBU, to overcome interference from an external environment to the sensing signal, thereby achieving around-the-clock micro-deformation measurement with high accuracy. The BBU and the AISU both perform clock calibration based on the satellite signal or the Ethernet signal, thereby improving reliability of data collected by the AISU.

FIG. 8 is a diagram of an architecture of still another deformation sensing system 8000 according to an embodiment of this application. The deformation sensing system 8000 includes a BBU 801, an AAU 802, and an AISU 803. The BBU 801 is connected to the AAU 802 through an eCPRI interface. The BBU 801 is further connected to a third timing module 804. The AISU 803 includes a sensor 8031 and a fourth timing module 8032. The AAU 802 is connected to the sensor 8031.

The third timing module 804 is based on a satellite signal (for example, using a GNSS as a clock source) or an Ethernet signal (for example, based on the IEEE 1888 protocol). The third timing module 804 generates a first timing signal. The BBU 801 calibrates an internal clock of the BBU based on reference time provided by the third timing module 804.

The fourth timing module 8032 generates a second timing signal. For example, the fourth timing module 8032 is based on a crystal oscillator in the AISU.

For other functions of the BBU 801, the AAU 802, and the AISU 803, refer to the foregoing descriptions. Details are not described herein again.

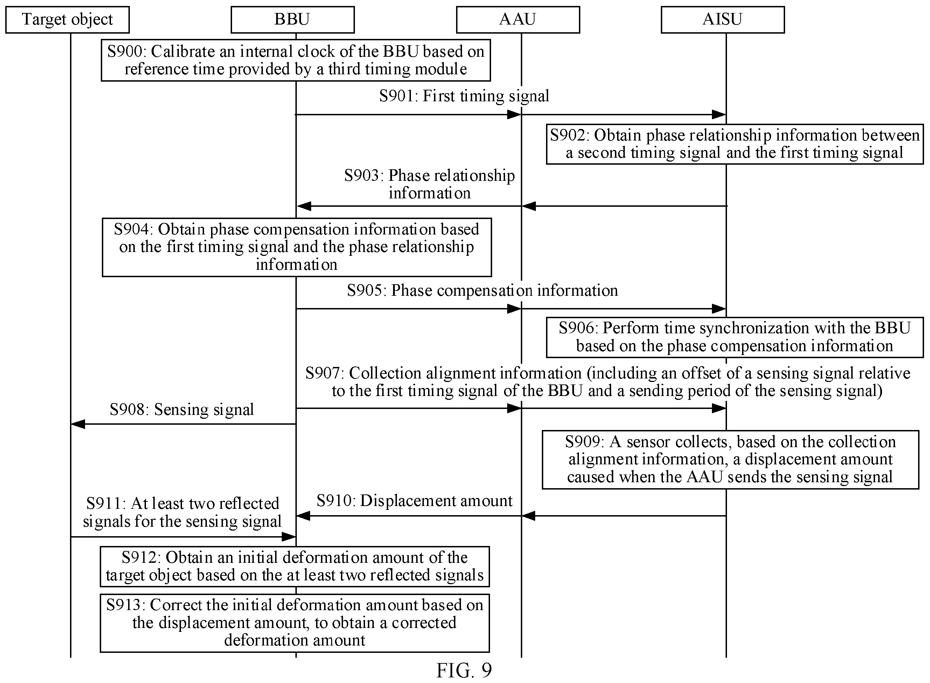

Based on the deformation sensing system shown in FIG. 8, FIG. 9 is a schematic flowchart of still another deformation sensing method according to an embodiment of this application. For example, the method may include the following steps.

S900: The BBU calibrates the internal clock of the BBU based on the reference time provided by the third timing module.

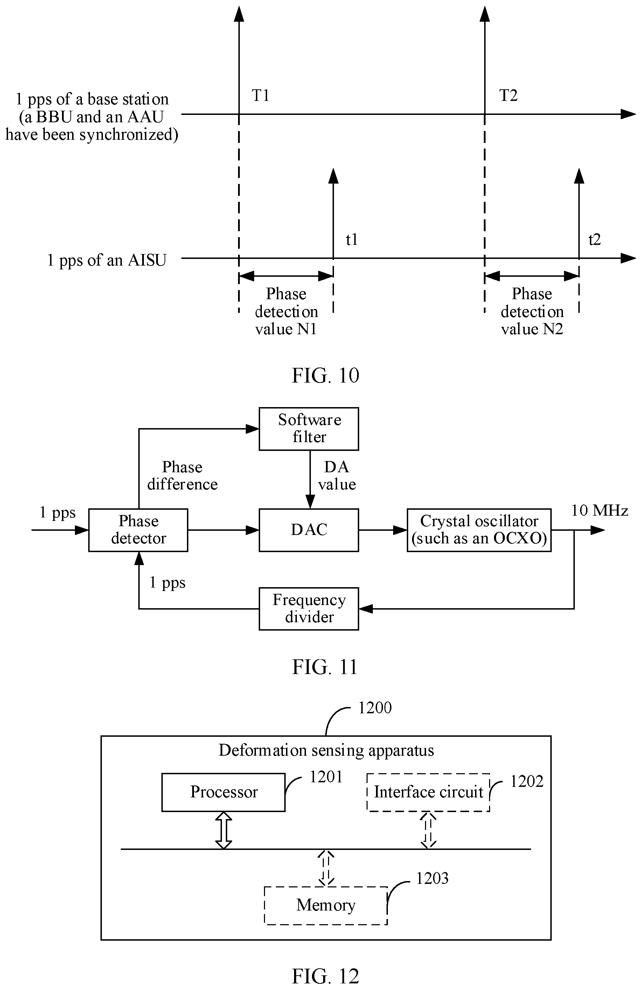

FIG. 10 is another diagram illustrating time synchronization between the BBU and the AISU according to an embodiment of this application. The first timing module (using the GNSS as an example herein) connected to the BBU generates the first timing signal, that is, a 1 PPS signal. T1 and T2 are time of 1 PPS generated by the GNSS connected to the BBU. The BBU calibrates the internal clock of the BBU based on reference time provided by the GNSS.

S901: The BBU sends the first timing signal to the AISU through the AAU. Correspondingly, the AISU receives the first timing signal.

After obtaining the first timing signal, the BBU sends the first timing signal to the AISU through the AAU. The first timing signal includes T1.

S902: The AISU obtains phase relationship information between the second timing signal and the first timing signal.

The fourth timing module 8032 in the AISU generates the second timing signal.

The AISU receives the first timing signal from the BBU, and may obtain the phase relationship information between the second timing signal and the first timing signal. The phase relationship information may also be referred to as a phase detection value N(t).

S903: The AISU sends the phase relationship information to the BBU through the AAU. Correspondingly, the BBU receives the phase relationship information.

For example, the AISU periodically (for example, every 1s) sends the phase relationship information to the BBU through an eCPRI interface.

S904: The BBU obtains phase compensation information based on the first timing signal and the phase relationship information.

After receiving the phase relationship information from the AISU, the BBU obtains the phase compensation information based on the first timing signal of the BBU and the received phase relationship information.

For example, the BBU may calculate the phase compensation information by using algorithms such as filtering and averaging.

S905: The BBU sends the phase compensation information to the AISU through the AAU. Correspondingly, the AISU receives the phase compensation information.

S906: The AISU performs time synchronization with the BBU based on the phase compensation information.

After receiving the phase compensation information from the BBU, the AISU may perform time synchronization with the BBU based on the phase compensation information.

FIG. 11 is a diagram illustrating a structure of a software phase-locked loop that implements clock synchronization through a phase detector according to an embodiment of this application. The software phase-locked loop includes the following modules: a phase detector, a digital-to-analog converter (digital-to-analog converter, DAC), a crystal oscillator (such as an oven controlled crystal oscillator (oven controlled crystal oscillator, OCXO)), a software filter, and a frequency divider.

The purpose of "the phase detector" is to count second signals of 1 PPS output by a local clock crystal oscillator using standard 1 PPS signals, and a result obtained through counting is a phase detection value.

After obtaining the phase detection value, the "software filter" calculates a frequency offset between a local crystal oscillator output clock and the standard 1 PPS based on algorithm parameters, calculates a corresponding value of the DAC device based on the frequency offset, and writes the device value to the DAC device. The value written to the DAC device is a digital-to-analog (digital-to-analog, DA) value. After the digital-to-analog conversion by the DAC, a voltage value that can control the OCXO is output to control an output frequency of the OCXO.

### The DA value is calculated as follows:

Control sensitivity of the crystal oscillator = Adjustable frequency range of the crystal oscillator/Adjustable range of the DA value.

The control sensitivity of the crystal oscillator indicates a variation degree of the crystal oscillator with a change of the DA value. For example, if control sensitivity of a 10 MHz crystal oscillator is 0.00065 Hz/bit, the DA value is increased or decreased by 1, and an output frequency of the crystal oscillator is increased or decreased by 0.00065 Hz. This value is measured at delivery.

The adjustable range of the DA value indicates a difference between a maximum and minimum software DA values. For example, for a 16-bit DAC, an adjustable range of DA value of the DAC is (65520 - 255) = 65265.

Adjustable frequency range of the crystal oscillator: The adjustable range of the crystal oscillator in the foregoing example is approximately (65265*0.00065) 42 Hz. Therefore, it may be learned that a system clock is in a range of 10 MHz ± 20 Hz. To be specific, when the DA value is 255, the system clock is 10 MHz - 20 Hz, and when the DA value is 65520, the system clock is 10 MHz + 20 Hz.

S907: The BBU transmits collection alignment information to the AISU through the AAU. Correspondingly, the AISU receives the collection alignment information.

The collection alignment information includes an offset of a sensing signal relative to the first timing signal of the BBU and a sending period of the sensing signal.

S908: The BBU sends the sensing signal through the AAU. Correspondingly, a target object receives the sensing signal.

S909: The sensor in the AISU collects, based on the collection alignment information, a displacement amount caused when the AAU sends the sensing signal.

S910: The AISU transmits the displacement amount to the BBU through the AAU. Correspondingly, the BBU receives the displacement amount.

S911: The target object sends at least two reflected signals for the sensing signal to the BBU. Correspondingly, the BBU receives the at least two reflected signals from the target object in response to the sensing signal.

S912: The BBU obtains an initial deformation amount of the target object based on the at least two reflected signals.

S913: The BBU corrects the initial deformation amount based on the displacement amount, to obtain a corrected deformation amount.

For specific implementations of the foregoing steps S907 to S913, refer to steps S401 to S407 in the embodiment shown in FIG. 4. Details are not described herein again.

For example, the deformation sensing system may be a base station. Therefore, measured data of the base station is corrected based on a displacement amount (that is, antenna vibration data) collected by a sensor on a base station antenna, so that testing accuracy of micro deformations can be improved.

According to the deformation sensing method provided in this embodiment of this application, through existing base station devices that have been deployed and operate around the clock, the BBU transmits the collection alignment information to the AISU, so that the AISU collects, based on the collection alignment information, the displacement amount caused when the AAU sends the sensing signal of the BBU, and sends the displacement amount to the BBU, and the BBU can correct, based on the displacement amount, the initial deformation amount of the target object obtained by the BBU, to overcome interference from an external environment to the sensing signal, thereby achieving around-the-clock micro-deformation measurement with high accuracy. The BBU performs clock calibration based on the satellite signal or the Ethernet signal, and the AISU performs time synchronization with the BBU based on the phase compensation information sent by the BBU, thereby improving reliability of data collected by the AISU.

It may be understood that in this application, an example in which the BBU and the AISU are used as execution subjects for interaction illustration is used for description, but this application does not limit the execution subjects for interaction illustration. For example, the BBU in the method provided in this application may be a chip, a chip system, or a processor used in the BBU, or may be a logical node, a logic module, or software that can implement all or some functions of the BBU. The AISU in the method provided in this application may be a chip, a chip system, or a processor used in the AISU, or may be a logical node, a logical module, or software that can implement all or some functions of the AISU.

In this application, that an entity A sends information to an entity B may mean that A directly sends information to B, or may mean that A indirectly sends information to B via another entity. Similarly, that the entity B receives information from the entity A may mean that the entity B directly receives information sent by the entity A, or may mean that the entity B indirectly receives, via another entity, information sent by the entity A.

It may be understood that, in the foregoing embodiments, the methods and/or the steps implemented by the BBU may also be implemented by a component (for example, a chip or a circuit) that can be used in the BBU, and the methods and/or the steps implemented by the AISU may also be implemented by a component (for example, a chip or a circuit) that can be used in the AISU.

The foregoing mainly describes the solutions provided in embodiments of this application from a perspective of interaction between the BBU and the AISU. Correspondingly, embodiments of this application further provide a deformation sensing apparatus. The deformation sensing apparatus is configured to implement the foregoing methods. The deformation sensing apparatus may be the BBU in the foregoing method embodiments, or may be a component that may be used in the BBU. Alternatively, the deformation sensing apparatus may be the AISU in the foregoing method embodiment, or may be a component that may be used in the AISU. It may be understood that, to implement the foregoing functions, the deformation sensing apparatus includes a corresponding hardware structure and/or a software module for performing functions. A person skilled in the art should be easily aware that the units and algorithm steps in the examples described with reference to embodiments disclosed in this specification can be implemented in a form of hardware or a combination of hardware and computer software in this application. Whether a function is performed by hardware or computer software driving hardware depends on specific applications and design constraints of the technical solutions. A person skilled in the art may use different methods to implement the described functions for each specific application, but it should not be considered that such implementation goes beyond the scope of this application.

In embodiments of this application, the deformation sensing apparatus may be divided into function modules based on the foregoing method embodiments. For example, division into the function modules may be based on corresponding functions, or two or more functions may be integrated into one processing unit. The foregoing integrated module may be implemented in a form of hardware, or may be implemented in a form of a software functional module. It should be noted that division into the modules in embodiments of this application is an example, and is merely logical function division. During actual implementation, there may be another division manner.

Based on the same concept of the foregoing deformation sensing method, this application further provides the following deformation sensing apparatus.

FIG. 12 is a diagram of a structure of a deformation sensing apparatus according to an embodiment of this application. The deformation sensing apparatus 1200 includes a processor 1201. Optionally, the deformation sensing apparatus 1200 may further include an interface circuit 1202 (which is represented by a dashed line in the figure). The processor 1201 and the interface circuit 1202 are coupled to each other. It may be understood that the interface circuit 1202 may be a transceiver or an input/output interface. Optionally, the deformation sensing apparatus 1200 may further include a memory 1203 (which is represented by a dashed line in the figure). The memory 1203 is configured to store instructions executed by the processor 1201, store input data required by the processor 1201 to run the instructions, or store data generated after the processor 1201 runs the instructions.

When the deformation sensing apparatus is configured to implement the functions of the BBU in the foregoing method embodiment, the interface circuit 1202 is configured to transmit collection alignment information to an AISU through an AAU, where the collection alignment information includes an offset of a sensing signal relative to a first timing signal of the BBU and a sending period of the sensing signal; and the interface circuit 1202 sends the sensing signal through the AAU; the interface circuit 1202 receives a displacement amount from the AISU through the AAU, where the displacement amount is a displacement amount caused when the AAU sends the sensing signal and collected by the AISU based on the collection alignment information; the interface circuit 1202 receives at least two reflected signals from a target object in response to the sensing signal; the processor 1201 obtains an initial deformation amount of the target object based on the at least two reflected signals; and the processor 1201 corrects the initial deformation amount based on the displacement amount, to obtain a corrected deformation amount.

Optionally, the BBU performs time synchronization with the AISU.

Optionally, the BBU is further connected to a first timing module, where the first timing module is based on a satellite signal or an Ethernet signal. The processor 1201 calibrates an internal clock of the BBU based on reference time provided by the first timing module, where the first timing signal is generated by the first timing module.

Optionally, the BBU is further connected to a third timing module, where the third timing module is based on a satellite signal or an Ethernet signal. The processor 1201 calibrates an internal clock of the BBU based on reference time provided by the third timing module, where the first timing signal is generated by the third timing module. The interface circuit 1202 sends the first timing signal to the AISU through the AAU. The interface circuit 1202 receives, from the AISU through the AAU, phase relationship information between a second timing signal and the first timing signal, where the second timing signal is generated by a fourth timing module in the AISU, and the fourth timing module is based on a crystal oscillator in the AISU. The processor 1201 obtains phase compensation information based on the first timing signal and the phase relationship information. The interface circuit 1202 sends the phase compensation information to the AISU through the AAU.

Optionally, the corrected deformation amount is a difference between the initial deformation amount and the displacement amount.

When the deformation sensing apparatus is configured to implement the functions of the AISU in the foregoing method embodiment, the interface circuit 1202 receives, through the AAU, collection alignment information from the BBU, where the collection alignment information includes an offset of a sensing signal relative to a first timing signal of the BBU and a sending period of the sensing signal; the processor 1201 collects, based on the collection alignment information, a displacement amount caused when the AAU sends the sensing signal; and the interface circuit 1202 transmits the displacement amount to the BBU through the AAU.

Optionally, the AISU includes a sensor; and the sensor collects, based on the collection alignment information, the displacement amount caused when the AAU sends the sensing signal.

Optionally, the AISU performs time synchronization with the BBU.

Optionally, the AISU further includes a second timing module connected to the sensor, where the second timing module is based on a satellite signal or an Ethernet signal. The processor 1201 calibrates an internal clock of the AISU based on reference time provided by the second timing module.

Optionally, the AISU further includes a fourth timing module connected to the sensor, where the fourth timing module is based on a crystal oscillator in the AISU. The interface circuit 1202 receives the first timing signal from the BBU through the AAU. The processor 1201 obtains phase relationship information between a second timing signal and the first timing signal, where the second timing signal is generated by the fourth timing module. The interface circuit 1202 sends the phase relationship information to the BBU through the AAU. The interface circuit 1202 receives phase compensation information from the BBU through the AAU, where the phase compensation information is obtained by the BBU based on the first timing signal and the phase relationship information. The processor 1201 performs time synchronization with the BBU based on the phase compensation information.

Optionally, the corrected deformation amount is a difference between the initial deformation amount and the displacement amount.

When the foregoing deformation sensing apparatus is a chip used in the BBU, the chip implements the functions of the BBU in the foregoing method embodiments. The chip receives information from another module (such as a radio frequency module or an antenna) in the BBU, where the information is sent by the AAU to the BBU. Alternatively, the chip sends information to another module (such as a radio frequency module or an antenna) in the BBU, where the information is sent by the BBU to the AAU.

When the foregoing deformation sensing apparatus is a chip used in the AISU, the chip implements the functions of the AISU in the foregoing method embodiments. The chip receives information from another module (such as a radio frequency module or an antenna) in the AISU, where the information is sent by the AAU to the AISU. Alternatively, the chip sends information to another module (such as a radio frequency module or an antenna) in the AISU, where the information is sent by the AISU to the AAU.

It may be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Embodiments of this application further provide a computer-readable storage medium, where the computer-readable storage medium stores a computer program or instructions, and when the computer program or the instructions are executed, the methods in the foregoing embodiments are implemented.

Embodiments of this application further provide a computer program product including instructions, where the instructions, when executed on a computer, cause the computer to perform the methods in the foregoing embodiments.

Embodiments of this application further provide a deformation sensing system, including the foregoing deformation sensing apparatus.

Embodiments of this application further provide a circuit, where the circuit is coupled to a memory, and the circuit is configured to perform the methods in the foregoing embodiments. The circuit may include a chip circuit.

Embodiments of this application further provide a chip apparatus, including a processor, configured to invoke a computer program or computer instructions stored in a memory, to cause the processor to perform the method provided in any one of embodiments shown in the foregoing FIG. 4, FIG. 6, and FIG. 9.

In a possible implementation, an input of the chip apparatus corresponds to a receiving operation in any one of embodiments shown in the foregoing FIG. 4, FIG. 6, and FIG. 9, and an output of the chip apparatus corresponds to a sending operation in any one of embodiments shown in the foregoing FIG. 4, FIG. 6, and FIG. 9.

Optionally, the processor is coupled to the memory through an interface.

Optionally, the chip apparatus further includes a memory. The memory stores the computer program or the computer instructions.

It should be noted that the foregoing units or one or more of the units may be implemented through software, hardware, or a combination thereof. When any one of the foregoing units or the units are implemented through software, the software exists in a form of computer program instructions and is stored in a memory, and the processor may be configured to execute the program instructions and implement the foregoing method process.

In this application, the processor may be a general-purpose processor, a digital signal processor, an application-specific integrated circuit, a field programmable gate array, another programmable logic device, a discrete gate, a transistor logic device, or a discrete hardware component, and may implement or perform the methods, steps, and logic block diagrams disclosed in this application. The general-purpose processor may be a microprocessor, any conventional processor, or the like. The steps of the methods disclosed with reference to this application may be directly performed by a hardware processor, or may be performed through a combination of hardware and a software module in a processor.

When the foregoing unit or the units are implemented through hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not rely on software to perform the foregoing method process.

Optionally, embodiments of this application further provide a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. Embodiments of this application constitute no specific limitation.

Alternatively, the memory in this application may be a circuit or any other apparatus that can implement a storage function, and is configured to store program instructions and/or data. The memory is any other medium capable of carrying or storing desired program code in a form of instructions or a data structure, and accessible by a computer, but is not limited thereto. For example, the memory may be a non-volatile memory, such as a digital versatile disc (digital versatile disc, DVD), a hard disk drive (hard disk drive, HDD), or a solid-state drive (solid-state drive, SSD), or may be a volatile memory (volatile memory), such as a random-access memory (random-access memory, RAM).

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A. In this application, information indicated by the indication information is referred to as to-be-indicated information. In a specific implementation process, there are many manners of indicating the to-be-indicated information, for example, but not limited to directly indicating the to-be-indicated information, such as the to-be-indicated information itself or an index of the to-be-indicated information; or indirectly indicating the to-be-indicated information by indicating other information, where an association relationship exists between the other information and the to-be-indicated information. Alternatively, only part of the to-be-indicated information may be indicated, and the other part of the to-be-indicated information is known or agreed upon in advance. For example, specific information may alternatively be indicated based on an arrangement sequence of the information that is agreed upon in advance (for example, stipulated in a protocol), to reduce indication overheads to some extent. The to-be-indicated information may be sent together as a whole, or may be divided into a plurality of pieces of sub-information and sent separately. In addition, sending periods and/or sending occasions of these pieces of sub-information may be the same or different. A specific sending method is not limited in this application. The sending periods and/or the sending occasions of these pieces of sub-information may be predefined, for example, predefined in a protocol, or may be configured by a transmitter device by sending configuration information to a receiver device.

At least one (item) involved in this application indicates one (item) or more (items). "A plurality of (items)" means two (items) or more (items). A term "and/or" means an association relationship for describing associated objects and represents that three relationships may exist. For example, A and/or B may represent the following three cases: only A exists, both A and B exist, and only B exists. A character "/" generally indicates an "or" relationship between the associated objects. In addition, it should be understood that although the terms such as "first" and "second" may be used in this application to describe various objects, the objects should not be limited to these terms. These terms are merely used to distinguish between the objects.

The terms "include", "have", and any variant thereof mentioned above are intended to cover a non-exclusive inclusion. For example, a process, a method, a system, a product, or a device that includes a series of steps or units is not limited to the listed steps or units, and instead, optionally further includes another step or unit that is not listed, or optionally further includes another step or unit that is intrinsic to the process, method, product, or device. It should be noted that, in this application, a phrase such as "in an example" or "for example" is used to represent giving an example, an illustration, or a description. Any method or design solution described as "in an example" or "for example" in this application should not be explained as being more preferred or having more advantages than another method or design solution. To be precise, use of the phrase such as "in an example" or "for example" is intended to present a relative concept in a specific manner.

A network element in the deformation sensing system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the deformation sensing system may include at least one terminal device and at least one network device. The network device may send a downlink signal to the terminal device, and/or the terminal device may send an uplink signal to the network device. In addition, it may be understood that, if the deformation sensing system includes a plurality of terminal devices, the plurality of terminal devices may send signals to each other. In other words, a network element for sending a signal and a network element for receiving a signal may be both terminal devices.

All or some of the foregoing embodiments may be implemented through software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the processes or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of disclosed embodiments by viewing the accompanying drawings, disclosed content, and appended claims. In the claims, a term "comprising" (comprising) does not exclude another component or step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of each embodiment have different focuses, and for a part that is not described in detail in an embodiment, refer to the relevant description of another embodiment.

The components of the apparatus of embodiments of this application may be merged, divided, and deleted based on an actual need. A person skilled in the art may integrate or combine different embodiments in this specification and features of the different embodiments.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

## Claims

1. A deformation sensing method, wherein the method is applied to a baseband unit BBU, the BBU is connected to an active antenna unit AAU, the AAU is connected to an antenna information sensor unit AISU, and the method comprises:
transmitting, by the BBU, collection alignment information to the AISU through the AAU, wherein the collection alignment information comprises an offset of a sensing signal relative to a first timing signal of the BBU and a sending period of the sensing signal;
sending, by the BBU, the sensing signal through the AAU;
receiving, by the BBU, a displacement amount from the AISU through the AAU, wherein the displacement amount is a displacement amount caused when the AAU sends the sensing signal and collected by the AISU based on the collection alignment information;
receiving, by the BBU, at least two reflected signals from a target object in response to the sensing signal;
obtaining, by the BBU, an initial deformation amount of the target object based on the at least two reflected signals; and
correcting, by the BBU, the initial deformation amount based on the displacement amount, to obtain a corrected deformation amount.

2. The method according to claim 1, wherein the method further comprises:
performing, by the BBU, time synchronization with the AISU.

3. The method according to claim 2, wherein the BBU is further connected to a first timing module, and the first timing module is based on a satellite signal or an Ethernet signal; and
the performing, by the BBU, time synchronization with the AISU comprises:
calibrating, by the BBU, an internal clock of the BBU based on reference time provided by the first timing module, wherein the first timing signal is generated by the first timing module.

4. The method according to claim 2, wherein the BBU is further connected to a third timing module, and the third timing module is based on a satellite signal or an Ethernet signal; and
the performing, by the BBU, time synchronization with the AISU comprises:
calibrating, by the BBU, an internal clock of the BBU based on reference time provided by the third timing module, wherein the first timing signal is generated by the third timing module;
sending, by the BBU, the first timing signal to the AISU through the AAU;
receiving, by the BBU, phase relationship information between a second timing signal and the first timing signal, from the AISU through the AAU, wherein the second timing signal is generated by a fourth timing module in the AISU, and the fourth timing module is based on a crystal oscillator in the AISU;
obtaining, by the BBU, phase compensation information based on the first timing signal and the phase relationship information; and
sending, by the BBU, the phase compensation information to the AISU through the AAU.

5. The method according to any one of claims 1 to 4, wherein the corrected deformation amount is a difference between the initial deformation amount and the displacement amount.

6. A deformation sensing method, wherein the method is applied to an antenna information sensor unit AISU, the AISU is connected to a baseband unit BBU through an active antenna unit AAU, and the method comprises:
receiving, by the AISU through the AAU, collection alignment information from the BBU, wherein the collection alignment information comprises an offset of a sensing signal relative to a first timing signal of the BBU and a sending period of the sensing signal;
collecting, by the AISU based on the collection alignment information, a displacement amount caused when the AAU sends the sensing signal; and
transmitting, by the AISU, the displacement amount to the BBU through the AAU.

7. The method according to claim 6, wherein the AISU comprises a sensor; and
the sensor collects, based on the collection alignment information, the displacement amount caused when the AAU sends the sensing signal.

8. The method according to claim 7, wherein the method further comprises:
performing, by the AISU, time synchronization with the BBU.

9. The method according to claim 8, wherein the AISU further comprises a second timing module connected to the sensor, and the second timing module is based on a satellite signal or an Ethernet signal; and
the performing, by the AISU, time synchronization with the BBU comprises:
calibrating, by the AISU, an internal clock of the AISU based on reference time provided by the second timing module.

10. The method according to claim 8, wherein the AISU further comprises a fourth timing module connected to the sensor, and the fourth timing module is based on a crystal oscillator in the AISU; and
the performing, by the AISU, time synchronization with the BBU comprises:
receiving, by the AISU, the first timing signal from the BBU through the AAU;
obtaining, by the AISU, phase relationship information between a second timing signal and the first timing signal, wherein the second timing signal is generated by the fourth timing module;
sending, by the AISU, the phase relationship information to the BBU through the AAU;
receiving, by the AISU, phase compensation information from the BBU through the AAU, wherein the phase compensation information is obtained by the BBU based on the first timing signal and the phase relationship information; and
performing, by the AISU, time synchronization with the BBU based on the phase compensation information.

11. The method according to any one of claims 6 to 10, wherein a corrected deformation amount is a difference between an initial deformation amount and the displacement amount.

12. A deformation sensing method, wherein the method is applied to a deformation sensing system, the deformation sensing system comprises a baseband unit BBU, an active antenna unit AAU connected to the BBU, and an antenna information sensor unit AISU connected to the AAU, and the method comprises:
transmitting, by the BBU, collection alignment information to the AISU through the AAU, wherein the collection alignment information comprises an offset of a sensing signal relative to a first timing signal of the BBU and a sending period of the sensing signal;
sending, by the BBU, the sensing signal through the AAU;
collecting, by the AISU based on the collection alignment information, a displacement amount caused when the AAU sends the sensing signal;
transmitting, by the AISU, the displacement amount to the BBU through the AAU;
receiving, by the BBU, at least two reflected signals from a target object in response to the sensing signal;
obtaining, by the BBU, an initial deformation amount of the target object based on the at least two reflected signals; and
correcting, by the BBU, the initial deformation amount based on the displacement amount, to obtain a corrected deformation amount.

13. The method according to claim 12, wherein the AISU comprises a sensor; and
the sensor collects, based on the collection alignment information, the displacement amount caused when the AAU sends the sensing signal.

14. The method according to claim 13, wherein the method further comprises:
performing, by the BBU, time synchronization with the AISU.

15. The method according to claim 14, wherein the deformation sensing system further comprises a first timing module connected to the BBU, the AISU further comprises a second timing module connected to the sensor, and the first timing module and the second timing module are both based on a satellite signal or an Ethernet signal; and
the performing, by the BBU, time synchronization with the AISU comprises:
calibrating, by the BBU, an internal clock of the BBU based on reference time provided by the first timing module, wherein the first timing signal is generated by the first timing module; and
calibrating, by the AISU, an internal clock of the AISU based on reference time provided by the second timing module.

16. The method according to claim 14, wherein the deformation sensing system further comprises a third timing module connected to the BBU, the AISU further comprises a fourth timing module connected to the sensor, the third timing module is based on a satellite signal or an Ethernet signal, and the fourth timing module is based on a crystal oscillator in the AISU; and
the performing, by the BBU, time synchronization with the AISU comprises:
calibrating, by the BBU, an internal clock of the BBU based on reference time provided by the third timing module, wherein the first timing signal is generated by the third timing module;
sending, by the BBU, the first timing signal to the AISU through the AAU;
obtaining, by the AISU, phase relationship information between a second timing signal and the first timing signal, wherein the second timing signal is generated by the fourth timing module;
sending, by the AISU, the phase relationship information to the BBU through the AAU;
obtaining, by the BBU, phase compensation information based on the first timing signal and the phase relationship information;
sending, by the BBU, the phase compensation information to the AISU through the AAU; and
performing, by the AISU, time synchronization with the BBU based on the phase compensation information.

17. The method according to any one of claims 12 to 16, wherein the corrected deformation amount is a difference between the initial deformation amount and the displacement amount.

18. A deformation sensing apparatus, comprising a unit for implementing the method according to any one of claims 1 to 5, or comprising a unit for implementing the method according to any one of claims 6 to 11.

19. A deformation sensing system, wherein the deformation sensing system comprises a baseband unit BBU, an active antenna unit AAU connected to the BBU, and an antenna information sensor unit AISU connected to the AAU;
the BBU is configured to implement the method according to any one of claims 1 to 5; and
the AISU is configured to implement the method according to any one of claims 6 to 11.

20. A deformation sensing apparatus, comprising a memory, a processor, and a computer program stored in the memory and executable on the processor, wherein the processor implements the method according to any one of claims 1 to 5 when executing the computer program, or the method according to any one of claims 6 to 11 when executing the computer program.

21. A chip, wherein the chip is configured to perform the method according to any one of claims 1 to 5, or the method according to any one of claims 6 to 11.

22. A chip module, comprising an interface component and a chip, wherein the chip is configured to perform the method according to any one of claims 1 to 5, or the method according to any one of claims 6 to 11.

23. A computer-readable storage medium, wherein the storage medium stores a computer program or instructions, and when the computer program or the instructions are executed by a deformation sensing apparatus, the method according to any one of claims 1 to 5 or the method according to any one of claims 6 to 11 is implemented.

24. A computer program product comprising instructions, wherein when the instructions are run on a deformation sensing apparatus, the deformation sensing apparatus is caused to perform the method according to any one of claims 1 to 11.
